# EUROPEAN PATENT APPLICATION

(11) **EP 4 446 627 A1**
(43) Date of publication of application: **16.10.2024**
(21) Application number: 22923046.1
(22) Date of filing: 04.03.2022
(51) Int. Cl.: F16K 1/32, F16K 1/02, F16K 27/02, F25B 41/345

(54) **ELECTRONIC EXPANSION VALVE AND REFRIGERATION EQUIPMENT**

(30) Priority: 26.01.2022 CN 202210092703
(71) Applicant: Guangdong Welling Motor Manufacturing Co., Ltd., Foshan, Guangdong 528311 (CN)
(72) Inventor: CHEN, Chao, Foshan, Guangdong 528311 (CN); ZENG, Qingjun, Foshan, Guangdong 528311 (CN); YANG, Mao, Foshan, Guangdong 528311 (CN)
(74) Representative: RGTH
(86) International application number: PCT/CN2022/079341
(87) International publication number: WO 2023/142225

(57) **Abstract**

An electronic expansion valve and a refrigeration equipment, the electronic expansion valve includes a valve housing (100), a nut (200), a valve stem (300), a guide collar (400) and a valve needle (500). The valve housing (100) is provided with a valve chamber (103) and a valve port (104) communicating with the valve chamber (103). The nut (200) is provided in the valve chamber (103). The valve stem (300) is provided in an inner cavity of the nut (200) and threadedly connected to the nut (200). The guide collar (400) is provided in the valve chamber (103) and provided at a side of the nut (200) close to the valve port (104). The valve needle (500) is inserted into the valve port (104) after passing through the guide collar (400); driven by the valve stem (300), the valve needle (500) is configured to move axially relative to the valve port (104) under guidance of the guide collar (400), thereby opening or closing the valve port (104). Therefore, the coaxiality between the valve needle and the valve port is guaranteed.

## Description

### CROSS-REFERENCE TO RELATED APPLICATIONS

This application claims priority to Chinese Patent Application No. 202210092703.6, filed on January 26, 2022. The disclosures of the above-mentioned application is incorporated herein by reference in its entirety.

### TECHNICAL FIELD

The present application relates to the field of electronic expansion valves, and in particular to an electronic expansion valve and a refrigeration equipment.

### BACKGROUND

At present, the electronic expansion valve uses the principle of a stepper motor to drive the magnetic rotor to rotate by the coil, and converts the rotational movement of the magnetic rotor into the axial movement of the valve stem. The valve stem drives the valve needle connected to it to rise or fall, and controls the flow rate of the electronic expansion valve.

In related technology, an electronic expansion valve mainly comprises a rotor, a valve stem, a nut and a valve needle, the valve stem is rotationally connected to the nut, the valve needle is located at the lower end of the valve stem, and the rotor drives the valve stem to move axially, thereby driving the valve needle to move axially, so as to achieve the purpose of blocking and opening the valve port. However, the coaxiality between the valve needle and the valve port of the electronic expansion valve is insufficient, causing the valve needle to get stuck easily, and affecting the reliability of the electronic expansion valve.

The above content is only used to assist in understanding the technical solution of the application and does not represent an admission that the above content is prior art.

### SUMMARY

### TECHNICAL PROBLEM

The main purpose of the present application is to propose an electronic expansion valve, which aims to ensure the coaxiality between the valve needle and the valve port.

### TECHNICAL SOLUTION

In order to achieve the above purpose, an electronic expansion valve proposed in the present application comprises:
a valve housing provided with a valve chamber and a valve port communicating with the valve chamber;
a nut provided in the valve chamber;
a valve stem provided in an inner cavity of the nut and threadedly connected to the nut;
a guide collar provided in the valve chamber, wherein the guide collar located at a side of the nut close to the valve port; and
a valve needle inserted into the valve port after passing through the guide collar; driven by the valve stem, the valve needle moves axially relative to the valve port under guidance of the guide collar, thereby opening or closing the valve port.

In an embodiment, the valve chamber comprises respectively a first valve chamber and a second valve chamber provided at both axial sides of the guide collar, and the guide collar or the valve housing are provided with a balance channel for communicating the first valve chamber and the second valve chamber.

In an embodiment, an installation step is protrudingly provided on an outer wall of the guide collar, an inner wall of the valve housing is correspondingly provided with a step space, and the installation step is engaged with the step space.

In an embodiment, the step space is jointly formed by a first step surface and a second step surface connected with the first step surface, the installation step comprises a third step surface abutted against the first step surface and a fourth step surface abutted against the second step surface, and the first step surface is provided parallel to an axial direction of the guide collar; at least one of the first step surface and the third step surface is recessed with a first air-passing groove, and at least one of the second step surface and the fourth step surface is recessed with a second air-passing groove communicating with the first air-passing groove, thereby forming the balance channel in the first air-passing groove and the second air-passing groove.

In an embodiment, a first guide surface is provided on a side of the first step surface away from the second step surface, and the first guide surface is provided gradually away from the third step surface in a direction away from the first step surface.

In an embodiment, a second guide surface is provided on one end of the third step surface close to the fourth step surface, and the second guide surface is provided gradually closer to the first step surface in a direction away from the fourth step surface.

In an embodiment, two second guide surfaces are provided, and a transition surface is provided between the two second guide surfaces; the transition surface is parallel to an axial direction of the guide collar; the transition surface is connected to the third step surface by one second guide surface, and is connected to the fourth step surface by the other second guide surface.

In an embodiment, a side wall of the valve housing is provided with a refrigerant-passing opening, and the outer wall of the guide collar is provided with a flow guide cone surface opposite to the refrigerant-passing opening.

In an embodiment, the outer wall of the guide collar is further provided with a connection surface, and the installation step is connected to the flow guide cone surface by the connection surface; the connecting surface is provided with an air-passing hole penetrating an inner wall of the guide collar to form the balance channel in the air-passing hole.

In an embodiment, the valve needle comprises a needle body and a connection part connected to the needle body, and the needle body is inserted into the valve port after passing through the guide collar.

In an embodiment, one end of the nut close to the valve port is provided with a first guide hole, and the connection part is inserted into the first guide hole to move axially under guidance of the first guide hole.

In an embodiment, a first avoidance hole and a second guide hole distributed along an axial direction and communicated with each other are formed in the guide collar; the needle body passes through the second guide hole, and one end of the connection part connected to the needle body is protrudes from the inner cavity of the nut and is accommodated in the first avoidance hole.

In an embodiment, a hole depth of the second guide hole is greater than or equal to 1 mm.

In an embodiment, the guide collar is further provided with a second avoidance hole, the second avoidance hole is communicated with one end of the first avoidance hole away from the guide hole, and the nut is partially accommodated in the second avoidance hole.

The present application further proposes refrigeration equipment, comprising the aforementioned electronic expansion valve.

### BENEFICIAL EFFECT

In the technical solution of the present application, on the one hand, the coaxiality of the valve needle and the valve port can be improved by restriction of the valve needle by the guide collar; on the other hand, after the valve stem drives the valve needle to move, the guide collar can play a guiding role in the axial movement of the valve needle to ensure that the valve needle moves smoothly. In this way, the valve needle can maintain a very high degree of coaxiality with the valve port in both the static state and the moving state, which is beneficial to ensuring the accuracy of the opening control of the valve port, thereby enabling to ensure the working reliability of the electronic expansion valve. Moreover, under the guidance of the guide collar, the valve needle will not move unnecessarily relative to the valve port. Therefore, it can also reduce the wear between the valve needle and the valve port, which is beneficial to extending the service life of the valve needle to further ensure the working reliability of the electronic expansion valve.

### BRIEF DESCRIPTION OF THE DRAWINGS

In order to explain the embodiments of the present application or the technical solutions in the existing technology more clearly, the accompanying drawings needed to be used in the description of the embodiments or the existing technology will be briefly introduced below. Obviously, the accompanying drawings in the following description are only some embodiments of the present application, other accompanying drawings can be obtained based on the provided accompanying drawings without exerting creative efforts for those skilled in the art.
FIG. 1 is a structural schematic view of an electronic expansion valve of an embodiment of the present application.
FIG. 2 is a partial enlarged view of A in FIG. 1.
FIG. 3 is a partial enlarged view of B in FIG. 1.
FIG. 4 is a partial enlarged view of C in FIG. 1.
FIG. 5 is a partial enlarged view of D in FIG. 1.
FIG. 6 is a partial enlarged view of E in FIG. 1.
FIG. 7 is a partial structural schematic view of an electronic expansion valve of an embodiment of the present application.
FIG. 8 is a partial enlarged view of F in FIG. 7.
FIG. 9 is a partial enlarged view of G in FIG. 7.
FIG. 10 is a partial structural schematic view of an electronic expansion valve of another embodiment of the present application.

### Explanation of reference numbers:

| reference number | name | reference number | name |
|---|---|---|---|
| 100 | valve housing | 400 | guide collar |
| 101 | outer cover | 401 | second guide hole |
| 102 | valve seat | 402 | first avoidance hole |
| 103 | valve chamber | 403 | second avoidance hole |
| 1031 | first valve chamber | 410 | installation step |
| 1032 | second valve chamber | 411 | third step surface |
| 104 | valve port | 412 | fourth step surface |
| 105 | refrigerant-passing opening | 413 | second guide surface |
| 110 | step space | 414 | transition surface |
| 111 | first step surface | 420 | flow guide cone surface |
| 112 | second step surface | 430 | connection surface |
| 113 | first guide surface | 440 | air-passing hole |
| 200 | nut | 500 | valve needle |
| 210 | installation hole | 501 | first end |
| 211 | threaded hole | 502 | second end |
| 212 | first guide hole | 510 | needle body |
| 300 | valve stem | 511 | main body section |
| 310 | elastic member | 512 | pointed end |
| 320 | flange part | 520 | connection part |
| 330 | positioning step | 530 | installation groove |
| 700 | limitation collar | 531 | avoidance space |
| 710 | first guide section | 532 | limitation step |
| 720 | first connecting section | 533 | main body part |
| 800 | driving collar | 534 | riveting part |
| 810 | second connecting section | 600 | bearing |
| 820 | second guide section | 900 | magnetic rotor |
| 830 | transition section | | |

The realization of the purpose, functional features and advantages of the present application will be further described in conjunction with the embodiments and with reference to the accompanying drawings.

### DETAILED DESCRIPTION OF THE EMBODIMENTS

The technical solutions in the embodiments according to the present application will be clearly and completely described below in conjunction with the accompanying drawings in the embodiments according to the present application, and it is clear that the described embodiments are only a part of the embodiments according to the present application, and not all of the embodiments. Based on the embodiments in the present application, all other embodiments obtained by those skilled in the art without making creative labor fall within the scope of the present application.

It should be noted that if there are directional instructions (such as up, down, left, right, front, back or the like) involved in the embodiments of the present application, the directional indications are only used to explain the relative positional relationship, movement and so on between various components in a specific posture (as shown in the accompanying drawings). If the specific posture changes, the directional indication will also change accordingly.

The terms "connect", "install" and "fix" should be understood in a broad sense. For example, "connect" can be a fixed connection, a detachable connection, or an integral connection; it can be a direct connection, or an indirect connection via an intermediate medium. For those skilled in the art, the specific meanings of the above terms in the present application can be understood on a case-by-case basis.

In the present application, if there are descriptions involving "first", "second" or the like in the embodiments of the present application, the descriptions of "first", "second" or the like are only for descriptive purposes and cannot be understood as indicating or implying the relative importance or implicitly indicating the quantity of the technical features indicated. Therefore, features defined as "first" and "second" may explicitly or implicitly comprise at least one of these features. In addition, the meaning of "and/or" appearing in the entire text comprises three parallel solutions, taking "A and/or B" as an example, it comprises solution A, or solution B, or a solution that satisfies both A and B at the same time. In addition, the technical solutions of various embodiments can be combined with each other, but it is based on that those skilled in the art can realize. When the combination of technical solutions is contradictory or cannot be realized, it should be considered that such combination of technical solutions does not exist and is not within the protection scope claimed by the present application.

The present application proposes an electronic expansion valve.

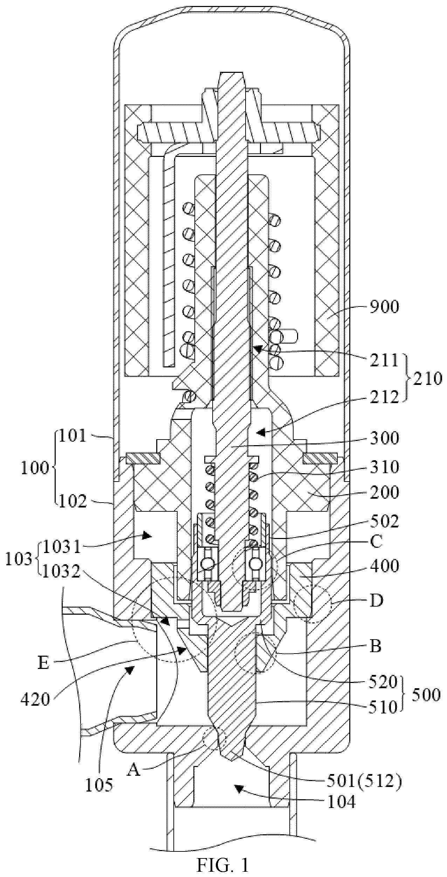

Please referring to FIG. 1, the electronic expansion valve comprises a valve housing 100, a nut 200, a valve stem 300, a guide collar 400 and a valve needle 500. The valve housing 100 is provided with a valve chamber 103 and a valve port 104 communicating with the valve chamber103. The nut 200 is provided in the valve chamber 103. The valve stem 300 is provided in an inner cavity of the nut 200 and threadedly connected to the nut 200. The guide collar 400 is provided in the valve chamber 103 and provided at a side of the nut 200 close to the valve port 104. The valve needle 500 is inserted into the valve port 104 after passing through the guide collar 400; driven by the valve stem 300, the valve needle 500 is configured to move axially relative to the valve port 104 under guidance of the guide collar 400, thereby opening or closing the valve port 104.

It can be understood that the guide collar 400 and the valve port 104 are coaxially provided. On the one hand, the coaxiality of the valve needle 500 and the valve port 104 can be improved by restriction of the valve needle 500 by the guide collar 400. On the other hand, after the valve stem 300 drives the valve needle 500 to move, the guide collar 400 can play a guiding role in the axial movement of the valve needle 500 to ensure that the valve needle 500 moves smoothly. In this way, the valve needle 500 can maintain a very high degree of coaxiality with the valve port 104 in both the static state and the moving state, which is beneficial to ensuring the accuracy of the opening control of the valve port 104, thereby enabling to ensure the working reliability of the electronic expansion valve. Moreover, under the guidance of the guide collar 400, the valve needle 500 will not move unnecessarily relative to the valve port 104. Therefore, it can also reduce the wear between the valve needle 500 and the valve port 104, which is beneficial to extending the service life of the valve needle 500 to further ensure the working reliability of the electronic expansion valve.

Furthermore, in this embodiment, please referring to FIG. 1 to FIG. 4 together, the valve needle 500 comprises a needle body 510 and a connection part 520 connected to the needle body 510, and the needle body 510 is inserted into the valve port 104 after passing through the guide collar 400. There is a clearance fit between the needle body 510 and the guide collar 400, and there is a clearance fit between the needle body 510 and the valve port 104. The connection part 520 has a part located in the inner cavity of the nut 200, and is disposed with a clearance from the inner wall surface of the nut 200. The fit clearance between the connection part 520 and the nut 200 is greater than the minimum fit clearance between the needle body 510 and the inner wall surface of the valve port 104, and the fit clearance between the needle body 510 and the guide collar 400 is larger than the minimum fit clearance between the needle body 510 and the inner wall surface of the valve port 104.

Specifically, the valve housing 100 comprises an outer cover 101 and a valve seat 102 fixedly connected to the outer cover 101. The outer cover 101 and the valve seat 102 enclose to form the valve chamber 103. The electronic expansion valve further comprises a magnetic rotor 900 located in the valve chamber 103, and the magnetic rotor 900 can rotate relative to the valve housing 100. The nut 200 is fixedly connected to the valve seat 102, and the magnetic rotor 900 drives the valve stem 300 to move, so as to drive the valve needle 500 to move, thereby controlling the flow rate of the electronic expansion valve.

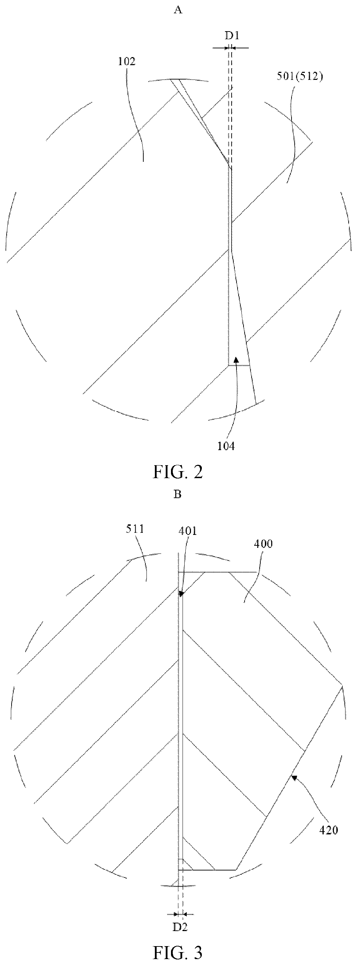

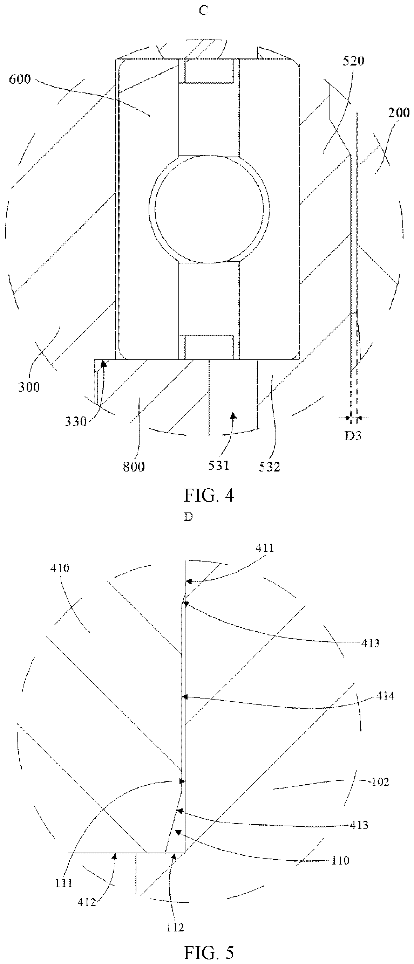

The nut 200 is provided with an installation hole 210 extending along its axial direction. The installation hole 210 comprises a first guide hole 212. The part of the connection part 520 located in the inner cavity of the nut 200 has a clearance fit with the first guide hole 212. The fit clearance between the connection part 520 and the nut 200 is the clearance between the outer wall surface of the connection part 520 and the inner wall surface of the first guide hole 212 (that is, D3 in FIG. 4). The needle body 510 is provided with a main body section 511 and a pointed end 512 distributed along the axial direction. The guide collar 400 is provided with a second guide hole 401. The main body section 511 passes through the second guide hole 401, and is in clearance fit with the second guide hole 401. The fit clearance between the needle body 510 and the guide collar 400 is the clearance between the outer wall surface of the main body section 511 and the inner wall surface of the second guide (that is, D2 in FIG. 3). The pointed end 512 is inserted into the valve port 104, and is in clearance fit with the inner wall surface of the valve port 104. The minimum fit clearance between the needle body 510 and the inner wall surface of the valve port 104 is the minimum fit clearance between the pointed end 512 and the inner wall surface of the valve port 104 (that is, D1 in FIG. 2). In addition, due to the existence of the minimum fit clearance, when the valve needle 500 closes the valve port 104, there is a certain clearance between the outer wall surface of pointed end 512 and the inner wall surface of valve port 104, which can reduce the friction between the valve needle 500 and the valve port 104, and prevent the valve needle 500 from getting stuck. In particular, a hole depth of the second guide hole is greater than or equal to 1 mm, so as to meet the maximum axial movement process of the needle body 510, thereby providing a guiding role during the axial movement of the needle body 510.

It can be understood that the first guide hole 212 and the second guide hole 401 should be coaxial with the valve port 104. The nut 200 provides a guiding function for the axial movement of the connection part 520 by the first guide hole 212, and the guide collar 400 provides a guiding function for the main body section 511 of the needle body 510 by the second guide hole 401, so as to ensure that the valve needle 500 as a whole can maintain a relatively high coaxiality with the valve port 104, thus enabling to reduce the friction between the valve needle 500 and the valve port 104, and ensuring the stability of the axial movement of the valve needle 500. In addition, in an embodiment, the needle body 510 and the connection part 520 can be integrally formed to improve the production and processing efficiency of the valve needle 500. Alternatively, the needle body 510 and the connection part 520 are independently formed and then fixedly connected to simplify the structure of the mold and ensure the yield of finished products.

In the electronic expansion valve of the present application, when a foreign object is stuck between the valve port 104 and the valve needle 500, even if the pointed end 512 of the needle body 510 is deflected, since the fit clearance between the main body section 511 of the needle body 510 and the second guide hole 401 is greater than the minimum fit clearance between the pointed end 512 and the inner wall surface of the valve port 104, there is sufficient movement space between the main body section 511 and the inner wall surface of the second guide hole 401. The main body section 511 is driven to tilt relative to the second guide hole 401, and will not be stuck with the second guide hole 401, but will still maintain a certain clearance with the inner wall surface of the second guide hole 401, which will not affect the upward movement and downward movement of the needle body 510. Moreover, since the clearance between the outer wall surface of the connection part 520 and the inner wall surface of the nut 200 is larger than the minimum fit clearance between the pointed end 512 and the inner wall surface of the valve port 104, there is also sufficient movement space between the connection part 520 and the first guide hole 212 of the nut 200. Similarly, even after the connection part 520 is driven to tilt relative to the inner wall of surface the first guide hole 212, it will not get stuck with the first guide hole 212, but will still maintains a certain clearance with the inner wall surface of the first guide hole 212. In this way, similarly, the upward movement and downward movement of the valve needle 500 as a whole will not be affected. In summary, when a foreign object is stuck between the pointed end 512 of the valve needle 500 and the valve port 104, since the main body section 511 of the valve needle 500 has sufficient movement space for deviation in the inner cavity of the guide collar 400, and the connection part 520 has sufficient movement space for deviation in the inner cavity of the nut 200, the valve needle 500 can still move smoothly in the up and down direction, thereby enabling to effectively prevent the valve needle 500 from being stuck, and at the same time further enabling to prevent the eccentricity caused by the coaxiality deviation of the valve stem and the valve needle during the assembly process from affecting the axial movement of the valve needle 500.

Furthermore, in this embodiment, the fit clearance between the connection part 520 and the nut 200 is larger than the fit clearance between the needle body 510 and the guide collar 400, That is, the clearance D3 between the outer wall surface of the connection part 520 and the inner wall surface of the first guide hole 212 is larger than the clearance D2 between the outer wall surface of the main body section 511 and the inner wall surface of the second guide hole 401. It can be understood that when the valve port 104 is opened, the pointed end 512 of the needle body 510 is separated from the valve port 104, at this time, if a foreign object gets stuck in the clearance between the main body section 511 and the second guide hole 401, even if the main body section 511 is tilted relative to the second guide hole 401 and drives the connection part 520 to be tilted relative to the first guide hole 212, the connection part 520 will not be stuck with the first guide hole 212, but will still maintains a certain clearance with the inner wall surface of the first guide hole 212. In this way, the upward movement and downward movement of the valve needle 500 as a whole will not be affected.

Furthermore, in the embodiment, as shown in FIG. 1, the installation hole 210 further comprises a threaded hole 211. The threaded hole 211 is located on a side of the first guide hole 212 away from the valve port 104, one end of the valve stem 300 is drivingly connected to the connection part 520, and the other end of the valve stem 300 is threadedly connected to the threaded hole 211. In this way, the coil drives the magnetic rotor 900 to rotate, and the magnetic rotor 900 drives the valve stem 300 to rotate. By mating with the thread of the nut 200, the valve stem 300 can perform circumferential rotation and axial movement simultaneously, the valve stem 300 then drives the valve needle 500 to move axially upward or axially downward, thereby controlling the flow rate of the electronic expansion valve. The threaded section of the valve stem 300 has a clearance fit with the threaded hole 211, so that the valve stem 300 can have a certain movement deviation in the radial direction relative to the nut 200, thus, the valve stem 300 and the nut 200 can further absorb the concentric deviation to improve the overall coaxiality.

In this embodiment, the fit clearance between the valve stem 300 and the threaded hole 211 is larger than the fit clearance between the connection part 520 and the first guide hole 212 (that is, D3). It can be understood that the valve stem 300 and the valve needle 500 cooperate coaxially, and when the connection part 520 is tilted relative to the first guide hole 212, since the minimum fit clearance between the valve stem 300 and the nut 200 occurs between the threaded section of the valve stem 300 and the threaded hole 211, this clearance value is greater than the fit clearance between the connection part 520 and the first guide hole 212. Therefore, there is sufficient movement space between the threaded section of the valve stem 300 and the threaded hole 211. Even if the valve stem 300 is driven and tilted relative to the nut 200, the threaded section of the valve stem 300 will not get stuck with the threaded hole 211 of the nut 200, and will not affect the upward movement and downward movement of the valve needle 500 of the electronic expansion valve.

Please referring to FIG. 1, FIG. 7 and FIG. 10 together, in some embodiments, the needle body 510 is provided with a first end 501 away from the connection part 520 (that is, the end where the pointed end 512 is located). The first end 501 is inserted into the valve port 104. The connection part 520 is provided with a second end 502 away from the needle body 510. The electronic expansion valve further comprises a bearing 600 and an elastic member 310. The bearing 600 is fixedly installed on the second end 502 by an outer ring. The valve stem 300 is movably inserted into the bearing 600 and coaxially cooperates with the valve needle 500. One end of the elastic member 310 is connected to the valve stem 300, and the other end of the elastic member 310 is connected to the bearing 600. Specifically, the end of the elastic member is connected to the end surface of the inner ring of the bearing 600 away from the first end 501. In this way, the valve stem 300 can drive the valve needle 500 to move axially by the elastic member 310. Moreover, by the meams that the valve stem 300 cooperates with the bearing 600, when the valve stem 300 rotates circumferentially, even if the inner ring of the bearing 600 is driven to rotate with the valve stem 300, the outer ring of the bearing 600 fixedly connected to the valve needle 500 can also remain stationary in the circumferential direction, and the valve needle 500 will not be driven to rotate circumferentially. In this embodiment, by cooperating the valve stem 300 with the bearing 600, the circumferential movement transmitted from the valve stem 300 to the valve needle 500 is offset. The valve stem 300 cooperates with the bearing 600 by the elastic member 310, and can drive the axial movement to the valve needle 500, so that the valve needle 500 only moves axially and does not rotate relative to the valve port 104, which is beneficial to reducing the wear between the valve needle 500 and the valve port 104, thereby ensuring the working reliability of the electronic expansion valve.

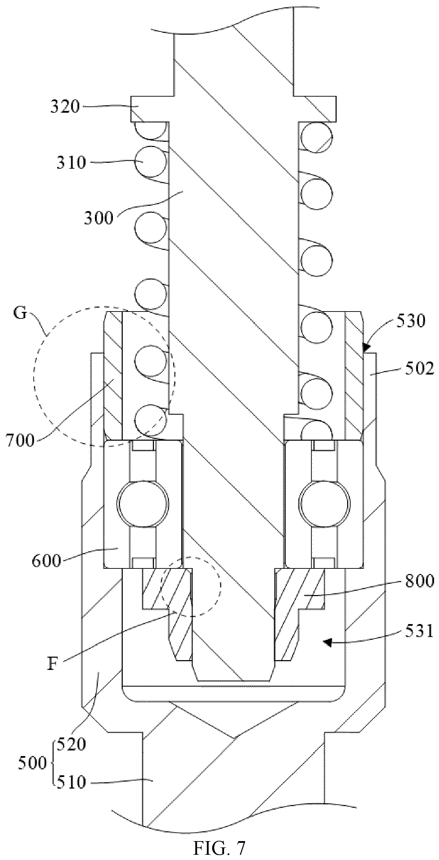

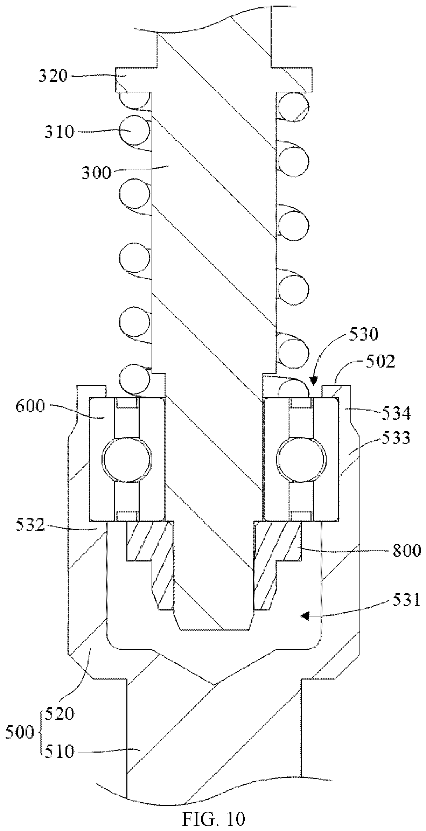

In an embodiment, the end of the elastic member 310 is connected to the valve stem 300 and the end surface of the inner ring of the bearing 600 by abutting or embedding. The end of the elastic member 310 can be directly abutted against the valve stem 300 or the end surface of the inner ring of the bearing 600, or it can be indirectly abutted against the valve stem 300 or the end surface of the inner ring of the bearing 600 by other parts. Without loss of generality, as shown in FIG. 7 and FIG. 10, in the embodiment, the elastic member 310 is configured as a spring, and the peripheral wall of the valve stem 300 is provided with a flange part 320. The spring is sleeved on the valve stem 300, one end is abutted against the flange part 320, and the other end is abutted against the end surface of the bearing 600, so as to achieve the connection with the valve stem 300 and the end surface of the inner ring of the bearing 600 respectively. Certainly, in other embodiments, the elastic member 310 can also be configured as an elastic piece, an elastic rubber sleeve, or an elastic silicone sleeve.

Furthermore, as shown in FIG. 1, FIG. 7 and FIG. 10, the connection part 520 is recessed at the second end 502 toward the direction of the first end 501 to form an installation groove 530, and the bearing 600 is fixedly installed in the installation groove 530 by an outer ring. In this way, the bearing 600 will not be exposed, and the matching structure of the bearing 600 and the installation groove 530 will also be contained in the installation groove 530 and will not be easily affected by impact, which is beneficial to ensuring a stable connection between the bearing 600 and the installation groove 530. Certainly, in other embodiments, the end surface of the second end 502 can also be a planar structure, and the bearing 600 is fixedly installed on the end surface of the second end 502. In this case, by leaving a clearance between the inner ring of the bearing 600 and the end surface of the second end 502, the inner ring of the bearing 600 can be driven to rotate relative to the connection part 520, and the valve needle 500 can also be prevented from circumferential rotation.

Furthermore, as shown in FIG. 7 and FIG. 10, the installation groove 530 is provided with a avoidance space 531 located on the side of the bearing 600 away from the second end 502, the valve stem 300 passes through the bearing 600, and the end of the valve stem 300 protrudes from the avoidance space 531. In this way, the end of the valve stem 300 can move toward the avoidance space 531 to compress the spring, thereby providing a preload force for the valve needle 500. Certainly, in other embodiments, it is also possible to extend the axial length of the bearing 600 to provide sufficient space for the valve stem 300 to move axially, thus ensuring that the spring can be compressed in place to provide sufficient preload force to the valve needle 500.

Furthermore, the installation groove 530 is provided with a first limiting part and a second limiting part distributed at both ends of the bearing 600. The first limiting part and the second limiting part are fixed relative to the installation groove 530 and abutted against both end surfaces of the outer ring of the bearing 600 respectively. In this way, by limiting the positions on both sides of the bearing 600 in the axial direction, the bearing 600 can be fixedly installed in the installation groove 530.

In some embodiments, as shown in FIG. 7, the installation groove 530 is provided with a first groove section and a second groove section distributed in the axial direction. The inner diameter of the first groove section is larger than the inner diameter of the second groove section, a limitation step 532 is formed at the communicating point between the first groove section and the second groove section, and the first limiting part is the limitation step 532. Furthermore, the second limiting part is a limitation collar 700 abutted against the end surface of the outer ring of the bearing 600 away from the first end 501, and the valve stem 300 is inserted into the bearing 600 after passing through the limitation collar 700. Without loss of generality, the limitation collar 700 is fixedly connected to the groove wall of the installation groove 530 by welding. It can be understood that both the limitation step 532 and the limitation collar 700 should be only abutted against the end surface of the outer ring of the bearing 600 to simultaneously limit the axial movement and circumferential rotation of the outer ring of the bearing 600. The axial movement of the inner ring of bearing 600 will also be restricted, but the circumferential rotation of the inner ring of bearing 600 will not be affected, so as to ensure that the inner ring of bearing 600 can be driven by valve stem 300 and plays the role of counteracting the circumferential rotation of the valve stem 300. Moreover, the cooperation of the limitation step 532 and the limitation collar 700 can provide a large clamping force in the axial direction of the bearing 600, thus avoiding the friction between the outer side surface of the bearing 600 and the groove wall of the installation groove 530, thereby ensuring that the bearing 600 can be stably installed in the installation groove 530.

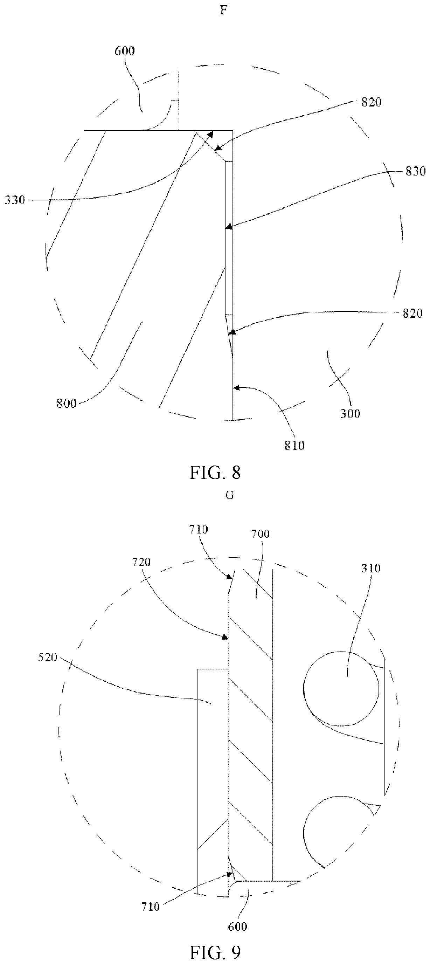

Furthermore, as shown in FIG. 9, the limitation collar 700 comprises a first guide section 710 and a first connecting section 720 that are distributed in the axial direction and connected with each other, the first connecting section 720 is connected to the groove wall of the first groove section, and the outer diameter of the first guide section 710 gradually decreases from an end connected to the first connecting section 720 toward an end away from the first connecting section 720. In this way, under the guidance of the first guide section 710, the limitation collar 700 can be installed into the installation groove 530 with less effort. Certainly, in other embodiments, it is also possible that the end surface of the first groove section away from the second groove section is provided with a guide structure, which not only can guide the limitation collar 700 into the installation groove 530, but also can guide the bearing 600 into the installation groove 530.

Furthermore, as shown in FIG. 9, both ends of the first connecting section 720 are each connected to one first guide section 710. That is, both end surfaces of the limitation collar 700 are provided with guide structures. When assembling the limitation collar 700, there is no need to distinguish the direction, and when either end of the limitation collar 700 is installed into the installation groove 530, it can be guided by the first guide section 710. In this way, by implementing a fool-proof design on the limitation collar 700, the production efficiency of the electronic expansion valve of the present application can be improved.

In some embodiments, as shown in FIG. 10, the bearing 600 is fixed in the installation groove 530 by riveting. Specifically, the groove wall of the first groove section comprises a main body part 533 and a riveting part 534. The riveting part 534 is connected to the groove wall of the second groove section by the main body part 533. That is, the riveting part 534 is the end of the groove wall of the first groove section. After the bearing 600 is installed at the limitation step 532, the outer ring of the bearing 600 is abutted against the groove wall surface of the first groove section, and the outer ring of the bearing 600 can be restricted in the circumferential direction, thereby further improving the installation stability of the bearing 600. Then, by bending the riveting part 534 so that the riveting part 534 is abutted against the end surface of the outer ring of the bearing 600, the bearing 600 can be riveted and fixed to the installation groove 530. The groove wall thickness of the riveting part 534 is smaller than the groove wall thickness of the main body part 533, so the riveting part 534 can be bent with less effort, and the riveting process of the bearing 600 can be realized more conveniently and quickly. In this embodiment, the riveting part 534 and the limitation step 532 serve as the first limiting part and the second limiting part respectively to fix the bearing 600 to the installation groove 530.

In some embodiments, as shown in FIG. 7 and FIG. 10, the electronic expansion valve further comprises a driving collar 800 fixedly sleeved on the end of the valve needle 500, the driving collar 800 is located on a side of the bearing 600 close to the first end 501 and is detachably abutted against the end surface of the bearing 600. In this way, when the valve stem 300 moves axially upward, since the limitation collar 700 is abutted against the end surface of the bearing 600, the limitation collar 700 is driven by the bearing 600 to move axially upward, the bearing 600 will also move upward when it is pushed, and the valve needle 500, which is fixedly connected to the bearing 600, will also move upward accordingly. Certainly, in other embodiments, it is also possible that the peripheral edge of the end of the valve stem 300 can also be provided with a driving convex part.ln this way, when the valve stem 300 moves axially upward, by the driving convex part pushes against the end face of the bearing 600, the valve needle 500 can also be driven to move upward.

Furthermore, as shown in FIG. 8, the end of the valve needle 500 is provided with a positioning step 330, and the driving collar 800 is abutted against the positioning step 330. In this way, during the process of installing the driving collar 800 on the valve needle 500, the positioning step 330 can play a positioning role. When the end surface of the driving collar 800 is abutted against the positioning step 330, it means that the driving collar 800 is installed in place. Certainly, in other embodiments, it is also possible that a positioning step 330 may be provided on the inside of the driving collar 800. When the end of the valve stem 300 is abutted against the positioning step 330, it means that the driving collar 800 is installed in place.

Furthermore, as shown in FIG. 8, the driving collar 800 comprises a second guide section 820 and a second connecting section 810 distributed in the axial direction. The valve stem 300 has an interference fit with the second connecting section 810, and the second guide section 820 is located on the side of the second connecting section 810 close to the bearing 600. The inner diameter of the second guide section 820 gradually increases from an end close to the second connecting section 810 toward an end far away from the second connecting section 810. In this way, the second guide section 820 can play a guiding role during the assembly process of the valve stem 300 and the driving collar 800, so that the operation of inserting the valve stem 300 into the driving collar 800 can be more labor-saving and faster.

Furthermore, as shown in FIG. 8, the driving collar 800 further comprises a transition section 830 located on the side of the second connecting section 810 close to the bearing 600. The driving collar 800 is provided with two second guide sections 820. The transition section 830 is connected to the end surface of the driving collar 800 by one second guide section 820, and is connected to the connecting section by the other second guide section 820. That is, between the end of the driving collar 800 close to the bearing 600 and the end of the driving collar 800 far away from the bearing 600, there are the second guide section 820, the transition section 830, the second guide section 820 and the second connecting section 810 connected in sequence, and the transition section 830 has a clearance fit with the valve stem 300. When assembling the driving collar 800, the valve stem 300 should be inserted from the end of the driving collar 800 close to the bearing 600, therefore, the end of the valve stem 300 will first contact the position with the largest inner diameter of the second guide section 820 at this end of the driving collar 800, which can facilitate the alignment and snap-in of the end of the valve stem 300. Under the guidance of the second guide section 820, the end of the valve stem 300 can be inserted into the transition section 830 with relatively little effort, and then passes through the transition section 830 to reach the other second guide section 820. The second guide section 820 is configured to guide the valve stem 300 to be inserted into the second connecting section 810. Since the second connecting section 810 has an interference fit with the valve stem 300, after the end of the valve stem 300 enters the second connecting section 810, the force needs to be increased so that the valve stem 300 continues to be inserted into the driving collar 800 until the driving collar 800 is abutted against the positioning step 330. In this way, the assembly of the driving collar 800 and the valve stem 300 can be achieved with less effort and faster, which is beneficial to improving the production efficiency of the electronic expansion valve.

Please referring to FIG. 1, FIG. 5 and FIG. 6 together, in some embodiments, a first avoidance hole 402 distributed along an axial direction and communicated with the second guide hole 401 is further provided in the guide collar 400, and one end of the connection part 520 connected to the needle body 510 is configured to protrude from the inner cavity of the nut 200 and is accommodated in the first avoidance hole 402. Furthermore, the guide collar 400 is further provided with a second avoidance hole 403, the second avoidance hole 403 is communicated with one end of the first avoidance hole 402 away from the guide hole 401, and the nut 200 is partially accommodated in the second avoidance hole 403e. It can be understood that the second guide hole 401 of the guide collar 400 needs to provide guidance and cooperation for the valve needle 500, and the valve needle 500 is located close to the valve port 104. If the guide collar 400 is connected to the valve housing 100 by the outer wall of the second guide hole 401, it will easily affect the flow of the refrigerant near the valve port 104. In this embodiment, the first avoidance hole 402 for avoiding connection part 520 and the second avoidance hole 403 for avoiding the nut 200 are sequentially provided on the side of the second guide hole 401 away from the valve port 104, therefore, the guide collar 400 is fixedly connected to the valve housing 100 by the outer wall of the first avoidance hole 402 or the outer wall of the second avoidance hole 403, so that the connection structure between the guide collar 400 and the valve housing 100 has a negative impact on the flow of the refrigerant.

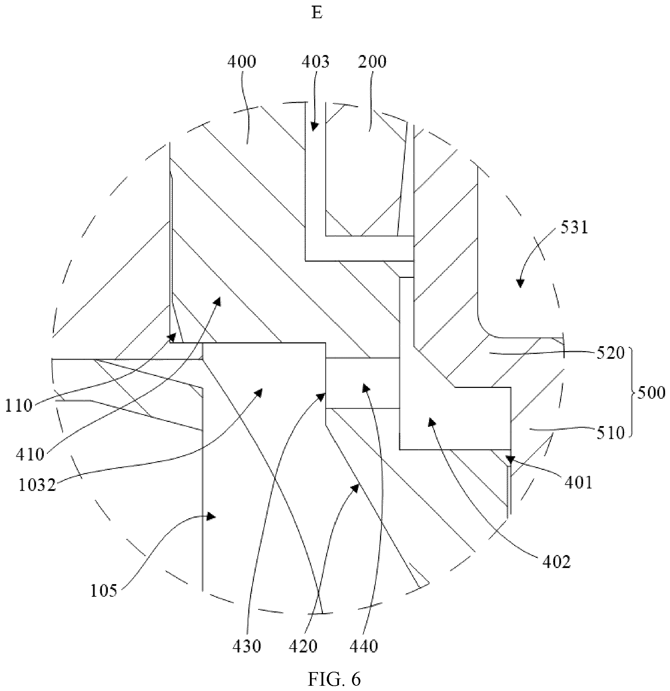

In some embodiments, as shown in FIG. 5 and FIG. 6, an installation step 410 is configured to protrude from an outer wall of the guide collar 400, an inner wall of the valve housing 100 is correspondingly provided with a step space 110, and the installation step 410 is engaged with the step space 110. Specifically, the installation step 410 is formed on the outer wall opposite the first avoidance hole 402 and the second avoidance hole 403, and the installation step 410 is engaged with the step space 110, so that the guide collar 400 can be fixedly installed on the valve housing 100.

Furthermore, as shown in FIG. 5, the step space 110 is jointly formed by a first step surface 111 and a second step surface 112 connected with the first step surface 111, the installation step 410 comprises a third step surface 411 abutted against the first step surface 111 and a fourth step surface 412 abutted against the second step surface 112, and the first step surface 111 is provided parallel to an axial direction of the guide collar 400. At least one of the end of the first step surface 111 away from the second step surface 112 and the end of the third step surface 411 close to the fourth step surface 412 is provided with a guide structure, which is configured to guide the installation step 410 to snap into the step space 110 when the guide collar 400 is assembled on the valve housing 100.

Specifically, in this embodiment, a first guide surface 113 is provided on a side of the first step surface 111 away from the second step surface 112, and the first guide surface 113 is provided gradually away from the third step surface 411 in a direction away from the first step surface 111. Furthermore, two second guide surface 413 are provided on one end of the third step surface 411 close to the fourth step surface 412, and the second guide surface 413 is provided gradually closer to the first step surface 111 in a direction away from the fourth step surface 412. A transition surface 414 is provided between the two second guide surfaces 413, and the transition surface 414 is parallel to an axial direction of the guide collar 400; the transition surface 414 is connected to the third step surface 411 by one second guide surface 413, and is connected to the fourth step surface 412 by the other second guide surface. In order to obtain the best guiding effect, the first guide surface 113 and the second guide surface 413 can be provided in parallel, that is, they are provided in parallel or approximately parallel.

During the process of assembling the guide collar 400 to the valve housing 100, the second guide surface 413, which is closer to the fourth step surface 412, enters the space inside the first guide surface 113 firstly. Then, as the installation step 410 is gradually stuck into the step space 110, the transition surface 414, the other guide surface, and the third step surface 411 enter the space inside the first guide surface 113 in sequence. In this process, at least one of the first guide surface 113 and the second guide surface 413 can play a role in guiding assembly until the third step surface 411 contacts the first step surface 111. In this way, by the stepped guide structure, the process of assembling the guide collar 400 to the valve housing 100 can be more labor-saving and faster, which is beneficial to improving the production efficiency of the electronic expansion valve.

In some embodiments, as shown in FIG. 6, a side wall of the valve housing 100 is provided with a refrigerant-passing opening 105, and the outer wall of the guide collar 400 is provided with a flow guide cone surface 420 opposite to the refrigerant-passing opening 105. In this way, when the refrigerant flows between the refrigerant-passing opening 105 and the valve port 104, the flow guide cone surface 420 can play a role in guiding the refrigerant flow to avoid chaos in the refrigerant flow, which will affect the working performance of electronic expansion valve. Especially in the heating state, after the refrigerant flows into the valve chamber 103 via the valve port 104, a flash evaporation phenomenon occurs in the valve chamber 103, the high-speed refrigerant will flow along the pointed end 512 of the valve needle 500 and the flow guide cone surface 420 of the guide collar 400. Therefore, the refrigerant can be smoothly led to the refrigerant-passing opening 105, thereby reducing the eddy current in the valve chamber 103 and reducing the fluid noise.

In some embodiments, as shown in FIG. 1, the valve chamber 103 comprises a first valve chamber 1031 and a second valve chamber 1032 respectively provided at both axial sides of the guide collar 400, and the guide collar 400 or the valve housing 100 are provided with a balance channel for communicating the first valve chamber 1031 and the second valve chamber 1032. Due to the setting of the balance channel, the air pressures of the first valve chamber 1031 and the air pressures of the second valve chamber 1032 can be balanced, which is beneficial to guaranteeing the stability of the internal pressure of the electronic expansion valve, reducing the action resistance of the valve needle 500, thereby ensuring the working performance of the electronic expansion valve.

In an embodiment, at least one of the first step surface 111 and the third step surface 411 is recessed with a first air-passing groove, and at least one of the second step surface 112 and the fourth step surface 412 is recessed with a second air-passing groove communicating with the first air-passing groove, so as to form the balance channel in the first air-passing groove and the second air-passing groove. Without loss of generality, in an embodiment, the first step surface 111, the second step surface 112, the third step surface 411 and the fourth step surface 412 are all provided in an annular shape, so that the installation step 410 and the step space 110 are correspondingly circular, and the first step surface 111 and the third step surface 411 not only have parts that abutted against each other, but also have parts that recessed to form the first air-passing groove. In the same way, the second step surface 112 and the fourth step surface 412 not only have parts that abutted against each other, but also have parts that recessed to form the second air-passing groove. In this way, the installation step 410 can be ensured to be stably engaged with the step space 110, and a balance channel can be formed for the first valve chamber 1031 and the second valve chamber 1032 to communicate. In this embodiment, the first valve chamber 1031 is located on the side of the guide collar 400 away from the valve port 104, both ends of the first air-passing groove respectively communicate with one end of the first valve chamber 1031 and one end of the second air-passing groove, and the other end of the second air-passing groove communicates with the second valve chamber 1032. In this way, the communication with the first valve chamber 1031 and the second valve chamber 1032 can be realized, which is beneficial to guaranteeing the stability of the internal pressure of the electronic expansion valve, thereby ensuring the working stability of the electronic expansion valve.

In an embodiment, as shown in FIG. 6, the outer wall of the guide collar 400 is further provided with a connection surface 430, and the installation step 410 is connected to the flow guide cone surface 420 by the connection surface 430; the connecting surface 430 is provided with an air-passing hole 440 penetrating an inner wall of the guide collar 400 to form the balance channel in the air-passing hole 440. Specifically, there is a clearance between the connection surface 430 and the inner wall surface of the valve housing 100, the connection surface 430 is provided relative to the first avoidance hole 402, and the air-passing hole 440 penetrates from the connection surface 430 to the inner wall surface of the first avoidance hole 402. In this way, the first valve chamber 1031 can communicate with the first avoidance hole 402 via the air-passing hole 440. It can be understood that the first avoidance hole 402 is to avoid the connection part 520, and there is a large clearance between it and the connection part 520; while the second avoidance hole 403 is to avoid the nut 200, there is also a large clearance between the second avoidance hole 403 and the nut 200. Therefore, both the space in the first avoidance hole 402 and the space in the second avoidance hole 403 belong to the space of the second valve chamber 1032. The first valve chamber 1031 communicates with the first avoidance hole 402, that is, communicates with the second valve chamber 1032, thus ensuring the stability of the internal pressure of the electronic expansion valve, thereby guaranteeing the working stability of the electronic expansion valve.

The present application further proposes a refrigeration equipment, and the refrigeration equipment comprises an electronic expansion valve. The specific structure of the electronic expansion valve refers to the above embodiment. Since the refrigeration equipment adopts all the technical solutions of all the above embodiments, it has at least all the beneficial effects brought by the technical solutions of the above embodiments, which will not be described again here. The refrigeration equipment can be air conditioners, freezers, refrigerators, heat pump water heaters, etc.

The above are only some embodiments of the present application, and are not intended to limit the scope of the present application. Under the inventive concept of the present application, any equivalent structure transformation made by using the description and accompanying drawings of the present application, or directly or indirectly applied in other related technical fields, is comprised within the scope of the present application.

## Claims

1. An electronic expansion valve, **characterized by** comprising:
a valve housing provided with a valve chamber and a valve port communicating with the valve chamber;
a nut provided in the valve chamber;
a valve stem provided in an inner cavity of the nut and threadedly connected to the nut;
a guide collar provided in the valve chamber, wherein the guide collar provided at a side of the nut close to the valve port; and
a valve needle inserted into the valve port after passing through the guide collar; wherein driven by the valve stem, the valve needle moves axially relative to the valve port under guidance of the guide collar, thereby opening or closing the valve port.

2. The electronic expansion valve according to claim 1, wherein the valve chamber comprises respectively a first valve chamber and a second valve chamber provided at both axial sides of the guide collar, and the guide collar or the valve housing are provided with a balance channel for communicating the first valve chamber and the second valve chamber.

3. The electronic expansion valve according to claim 2, wherein an installation step is protrudingly provided on an outer wall of the guide collar; an inner wall of the valve housing is correspondingly provided with a step space, and the installation step is engaged with the step space.

4. The electronic expansion valve according to claim 3, wherein the step space is jointly formed by a first step surface and a second step surface connected with the first step surface; the installation step comprises a third step surface abutted against the first step surface and a fourth step surface abutted against the second step surface, and the first step surface is provided parallel to an axial direction of the guide collar;
at least one of the first step surface and the third step surface is recessed with a first air-passing groove, and at least one of the second step surface and the fourth step surface is recessed with a second air-passing groove communicating with the first air-passing groove, thereby forming a balance channel in the first air-passing groove and the second air-passing groove; and/or
a first guide surface is provided on a side of the first step surface away from the second step surface, and the first guide surface is provided gradually away from the third step surface in a direction away from the first step surface; and/or
a second guide surface is provided on an end of the third step surface close to the fourth step surface, and the second guide surface is provided gradually closer to the first step surface in a direction away from the fourth step surface.

5. The electronic expansion valve according to claim 4, wherein two second guide surfaces are provided, and a transition surface is provided between the two second guide surfaces; the transition surface is parallel to the axial direction of the guide collar; the transition surface is connected to the third step surface by one second guide surface, and is connected to the fourth step surface by the other second guide surface.

6. The electronic expansion valve according to claim 3, wherein a side wall of the valve housing is provided with a refrigerant-passing opening, and the outer wall of the guide collar is provided with a flow guide cone surface opposite to the refrigerant-passing opening.

7. The electronic expansion valve according to claim 6, wherein the outer wall of the guide collar is further provided with a connection surface, and the installation step is connected to the flow guide cone surface by the connection surface; the connecting surface is provided with an air-passing hole penetrating an inner wall of the guide collar to form a balance channel in the air-passing hole.

8. The electronic expansion valve according to any one of claims 1 to 7, wherein the valve needle comprises a needle body and a connection part connected to the needle body, and the needle body is inserted into the valve port after passing through the guide collar; and/or
one end of the nut close to the valve port is provided with a first guide hole, and the connection part is inserted into the first guide hole to move axially under guidance of the first guide hole.

9. The electronic expansion valve according to claim 8, wherein a first avoidance hole and a second guide hole distributed along the axial direction and communicated with each other are formed in the guide collar; the needle body passes through the second guide hole, and one end of the connection part connected to the needle body protrudes from the inner cavity of the nut and is accommodated in the first avoidance hole.

10. The electronic expansion valve according to claim 9, wherein a hole depth of the second guide hole is greater than or equal to 1 mm; and/or
the guide collar is further provided with a second avoidance hole; the second avoidance hole is communicated with an end of the first avoidance hole away from the guide hole, and the nut is partially accommodated in the second avoidance hole.

11. A refrigeration equipment, **characterized by** comprising an electronic expansion valve according to any one of claims 1 to 10.
